## Europäisches Patentamt
## European Patent Office
## Office européen des brevets

(19)

(11) Numéro de publication: **0 260 317**
**B1**

---

(12) **FASCICULE DE BREVET EUROPEEN**

(45) Date de publication du fascicule du brevet: **06.06.90**

(51) Int. Cl.⁵: **B 62 J 5/06, H 02 K 21/22**

(21) Numéro de dépôt: **87902354.7**

(22) Date de dépôt: **12.03.87**

(86) Numéro de dépôt international:
**PCT/BE87/00005**

(87) Numéro de publication internationale:
**WO 87/05575 24.09.87 Gazette 87/21**

---

(54) **DISPOSITIF D'ECLAIRAGE POUR VEHICULE.**

---

(30) Priorité: **13.03.86 BE 216412**

(43) Date de publication de la demande:
**23.03.88 Bulletin 88/12**

(45) Mention de la délivrance du brevet:
**06.06.90 Bulletin 90/23**

(84) Etats contractants désignés:
**AT BE CH DE FR GB IT LI LU NL SE**

(56) Documents cités:
**DE-A-2 729 446**
**DE-A-3 126 150**
**US-A-4 075 603**

(73) Titulaire: **BAUWENS, Frank**
**Guido Gezellestraat 28**
**B-9470 Denderleeuw (BE)**
(73) Titulaire: **DE BOM VAN DRIESSCHE, Dirk**
**Guido Gezellestraat 58/24**
**B-9470 Denderleeuw (BE)**

(72) Inventeur: **BAUWENS, Frank**
**Guido Gezellestraat 28**
**B-9470 Denderleeuw (BE)**
Inventeur: **DE BOM VAN DRIESSCHE, Dirk**
**Guido Gezellestraat 58/24**
**B-9470 Denderleeuw (BE)**

(74) Mandataire: **Callewaert, Jean et al**
**Bureau Gevers S.A. rue de Livourne 7 bte 1**
**B-1050 Bruxelles (BE)**

---

Courier Press, Leamington Spa, England.

EP 0 260 317 B1

## Description

La présente invention est relative à un dispositif d'éclairage pour véhicule se déplaçant sans moteur et sur roues, tel que bicyclette, et tricycle, comprenant au moins une lampe alimentée par un générateur, en particulier une dynamo, le générateur étant annulaire et donc dépourvu d'arbre de rotation, le générateur étant agencé pour être monté de façon détachable latéralement par rapport à une desdites roues, entre les branches d'une fourche, le générateur comprenant un stator et un rotor pouvant être entraîné par ladite roue, le générateur comprenant au moins 16 pôles répartis sur 360° autour de l'axe de la roue de manière hétéropolaire face à un bobinage d'induction formé par une bobine unique, lesdits pôles et bobine étant montés de manière mobile l'un par rapport à l'autre, le stator étant fixé au châssis du véhicule de telle sorte que le générateur soit coaxial avec l'axe de la roue entraînant le rotor.

Un dispositif d'éclairage du type précité est connu par la demande de brevet DE—A—2729446. Le rotor présente sur son pourtour des pôles sous la forme d'aimants permanents, chaque fois de polarité alternante. Le stator comprend deux bobines d'excitation situées l'une en face de l'autre par rapport au centre du stator. Par la rotation du rotor par rapport au stator et par l'alternance des pôles nord et sud, un champ magnétique alternatif est formé dans le stator induisant ainsi un courant dans les bobines.

La demande de brevet DE—A—3126150 décrit également un dispositif d'éclairage destiné à une bicyclette. Le générateur de ce dispositif présente un stator qui est monté en rotation et qui peut, à cette fin, tourner sur paliers dans le boîtier du rotor. Il en va de même pour le rotor. Le boîtier du rotor est pourvu d'aimants. Si la roue tourne, il y a déplacement relatif des rotor et stator.

Un inconvénient des dispositifs connus est que la puissance obtenue par ceux-ci est faible ou que pour obtenir une puissance suffisante de ces dispositifs, des constructions lourdes s'imposent. Un autre inconvénient des dispositifs connus est que de sensibles pertes de courant sont causées par le fait que des courants de Foucault peuvent être induits avec le bobinage du stator.

Le dispositif d'éclairage suivant l'invention a pour but de remédier aux inconvénients mentionnés précédemment.

A cette fin, la bobine s'étend également sur 360° autour de l'axe de rotation, celle-ci est logée dans au moins une enveloppe métallique ajourée et le générateur est logé dans une enveloppe annulaire comprenant deux parties mobiles l'une par rapport à l'autre, une partie délimitant un logement ouvert latéralement, l'autre partie étant formée d'un couvercle pour ce logement, les pôles précités étant fixés sur une de ces parties, la bobine étant fixée sur l'autre partie.

L'enveloppe métallique ajourée présente des ouvertures qui permettent d'empêcher les lignes du champ magnétique de circuler uniquement d'un côté de l'enveloppe et de les forcer à parcourir toula la section transversale de l'enveloppe. Le flux magnétique est formé autour de la section transversale et à travers l'enveloppe, ce qui offre un meilleur flux et donc une puissance supérieure. Grâce à la présence de l'enveloppe métallique ajourée autour de la bobine, les courants de Foucault induits sont considérablement réduits car par la construction ajourée de ladite enveloppe métallique on obtient un champ beaucoup plus efficace engendrant un rendement plus élevé. On obtient ainsi une diminution substantielle des pertes de courant utile liées aux courants de Foucault.

Il est à noter que la présence d'un générateur comprenant au moins 16 pôles et une seule bobine qui s'étendent sur 360° est connue en soi et est décrite dans le brevet US-4,075,603. Cependant, le générateur qui y est décrit, est utilisé à une tout autre fin que celui appartenant au dispositif suivant l'invention. Il sert notamment dans un dispositif destiné à indiquer des conditions prédéterminées d'un corps en rotation.

Suivant une forme de réalisation avantageuse de l'invention, la partie formant le logement présente une section transversale en U sur une des parois intérieures duquel sont fixés les pôles, tandis que la bobine est fixée, d'une manière rigide, sur la face intérieure du couvercle en s'étendant également à l'intérieur du logement.

Suivant une forme de réalisation plus avantageuse de l'invention, des organes d'entraînement sont fixés sur la paroi extérieure du logement, ces organes coopérant avec des rayons de la roue tournant autour de son axe.

Suivant une forme de réalisation préférée de l'invention, le centre des spires formant la bobine est situé sur l'axe du générateur.

D'autres particularités et avantages de l'invention apparaîtront de la description donnée ci-après; cette description est donnée uniquement à titre d'exemple et ne limite pas la portée de la protection recherchée; les références utilisées se rapportent aux figures annexées.

La figure 1 est une représentation schématique d'une vue de profil d'une partie d'une bicyclette, qui est pourvue d'un dispositif d'éclairage suivant l'invention.

La figure 2 est une représentation schématique d'une vue en coupe, à plus grande échelle, selon la figure II—II de la figure 1, d'une partie importante de la forme de réalisation représentée à la figure 1.

La figure 3 illustre une vue latérale avec brisures partielles de cette même partie importante de la forme de réalisation représentée à la figure 1, avec certaines parties de la bicyclette sur lesquelles celle-ci est montée.

La figure 4 illustre une vue en perspective de l'enveloppe métallique ajourée.

La figure 5 est une représentation schématique du schéma électrique d'un dispositif d'éclairage suivant une première forme de réalisation de l'invention.

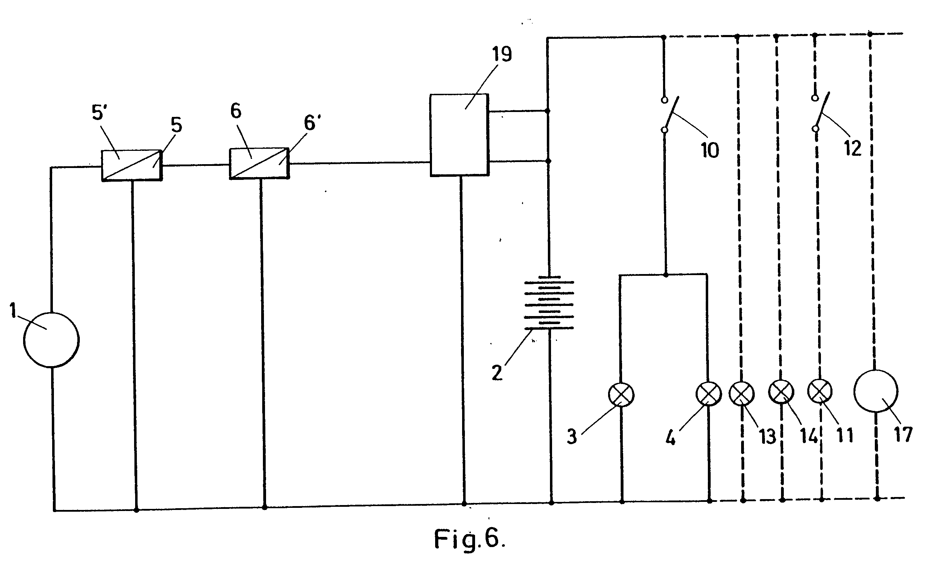

La figure 6 est une autre représentation schématique du schéma électrique selon une autre forme de réalisation de l'invention.

Sur ces différentes figures, les mêmes références se rapportent aux mêmes éléments.

De manière générale, l'invention se rapporte à un dispositif d'éclairage pour des véhicules qui se déplacent, sans moteur, sur des roues, dont un ou plusieurs feux sont alimentés par un générateur qui peut être entrîné par une roue de ce véhicule. Il s'agit ici de bicyclettes, de tricycles, etc.

Ce dispositif d'éclairage est caractérisé par le fait qu'au mons huit paires de pôles d'une part, et une seule bobine formant le bobinage d'induction, d'autre part, s'étendent sur un tour complet de 360°, pôles et bobine étant arrangés de manière mutuellement mobile.

Suivant une forme de réalisation plus spécifique de l'invention, la bobine est logée dans une enveloppe métallique ajourée de manière à obtenir un générateur à griffes.

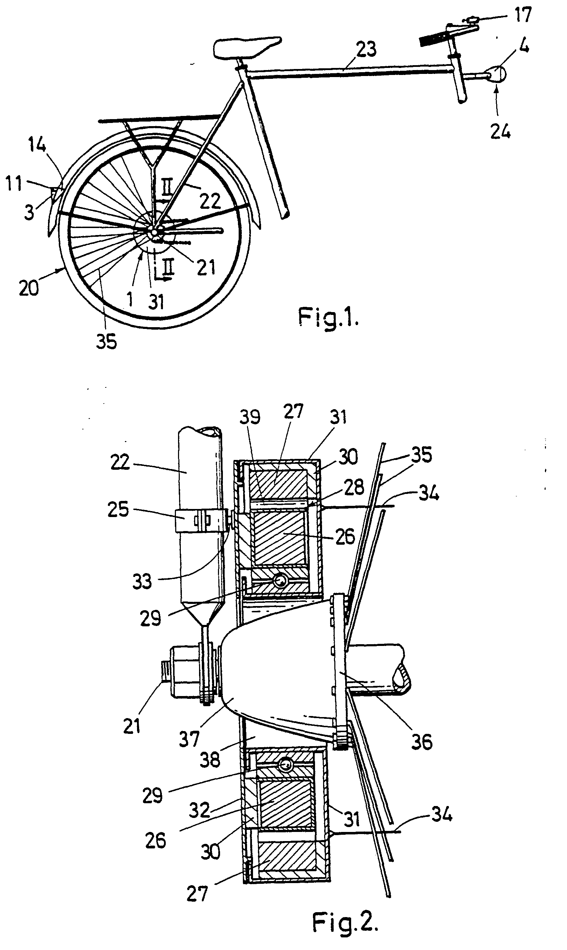

Sur la figure 1, on peut distinguer le générateur 1 qui est coaxial avec roue arrière 20 de la bicyclette autour de son axe fixe 21 et entre les branches de la fourche 22. Le générateur est relié électriquement aux feux arrière 3 et avant 4 et, éventuellement, à d'autres accessoires, tels que clignoteurs 14 et avertisseur 17, par le châssis 23 de la bicyclette.

Les pôles 27 ont une section rectangulaire et sont disposés alternativement sur 360°. Les pôles 27 sont fixés par une matière adhésive 30 à deux parois intérieures de la partie 31 de l'enveloppe du générateur 1 formant le logement présentant une section transversale en U. Cette partie formant le logement 31 est mobile par rapport à la fourche 22. Face aux pôles 27 et intérieurement à l'ensemble de ceux-ci, on rencontre l'enveloppe métallique ajourée 28 de la bobine 26 formant le stator, l'entrefer 39 séparant les pôles 27 de l'enveloppe ajourée 28 de la bobine 26 qui s'étend également sur un tour complet de 360° autour de l'axe du générateur 1.

L'enveloppe ajourée 28 de la bobine 26 est fixée sur la face intérieure de la partie formée d'un couvercle 32 pour le logement précité par de la matière adhésive 30.

La fixation du générateur 1, qui est annulaire et donc dépourvu d'arbre de rotation, sur la fourche 22 est réalisée par un collier de fixation 25, qui est relié à la partie fixe de l'enveloppe du générateur 1 par une vis de pression 33. La partie fixe de l'enveloppe du générateur est formée par le couvercle 32. Afin d'assurer un bon contact avec le châssis 23 reliant le dispositif d'éclairage à la terre, le collier est fait d'un métal bon conducteur.

Pour réduire les forces de frottement dues au mouvement relatif de l'enveloppe ajourée 28 et de la partie 31 formant logement, des roulements 29 sont prévus entre ces derniers. De préférence, on utilisera des roulements à billes.

La partie en U 31 de l'enveloppe du générateur formant rotor est encore pourvue, sur sa paroi extérieure, d'organes d'entraînement en saillie 34 qui coopèrent avec les rayons 35 de la roue de la bicyclette en mouvement.

Entre la partie en U de l'enveloppe et la partie saillante 37 du moyen 36 de la roue, il y a toujours un espace 38.

La bobine 26 est enroulée à l'intérieur de l'espace annulaire délimité par l'enveloppe métallique ajourée 28 de manière à former des spires dont les centres respectifs sont situés sur l'axe du générateur.

Le circuit électrique du dispositif d'éclairage comprend un générateur 1 servant à l'alimenter les feux arrière et avant 3,4 d'une bicyclette, avec un interrupteur 10, qui peut être commandé manuellement.

L'intégration dans le circuit électrique du dispositif d'une batterie rechargeable 2 permet d'éviter que les feux 3, 4 ne s'éteignent lorsque la bicyclette s'immobilise et de maintenir l'intensité aux feux constante.

Les feux 3, 4 sont alimentés par le générateur 1 ou la batterie 2 par l'intermédiaire de deux contacts 8, 9 qui sont commandés par un relais 7. Un stabilisateur de tension 5 est prévu à la sortie du générateur 1, empêchant la tension d'excéder un certain niveau, de stabilisateur étant précédé d'un redresseur 5'.

La batterie 2 est pourvue d'un rechargeur 6' et d'un indicateur de tension 6 qui contrôle si la tension de la batterie ne descend pas au-dessous d'un certain niveau. Se tel est le cas, l'indicateur 6 envoit une impulsion au rechargeur 6' afin de recharger la batterie 2 jusqu'au niveau du stabilisateur de tension 5 et est alors automatiquement déconnecté. Le rechargeur 6' proprement dit sert donc à recharger la batterie 2, sans l'endommager, jusqu'à son rendement maximum autorisé.

Une possibilité supplémentaire intéressante est le feu de stop 11 avec un interrupteur correspondant 12 qui est commandé par le dispositif de freinage, non représenté sur la figure, du véhicule.

D'autres accessoires possibles sont les clignoteurs 14, un avertisseur 17, etc., tous accompagnés de leurs interrupteurs commandés manuellement et montés en parallèle avec les feux 3, 4 et leur interrupteur 10.

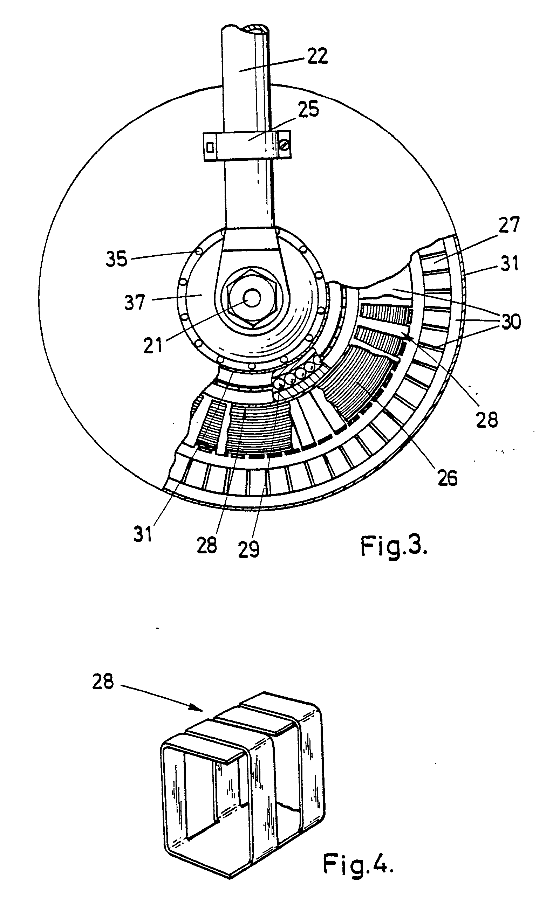

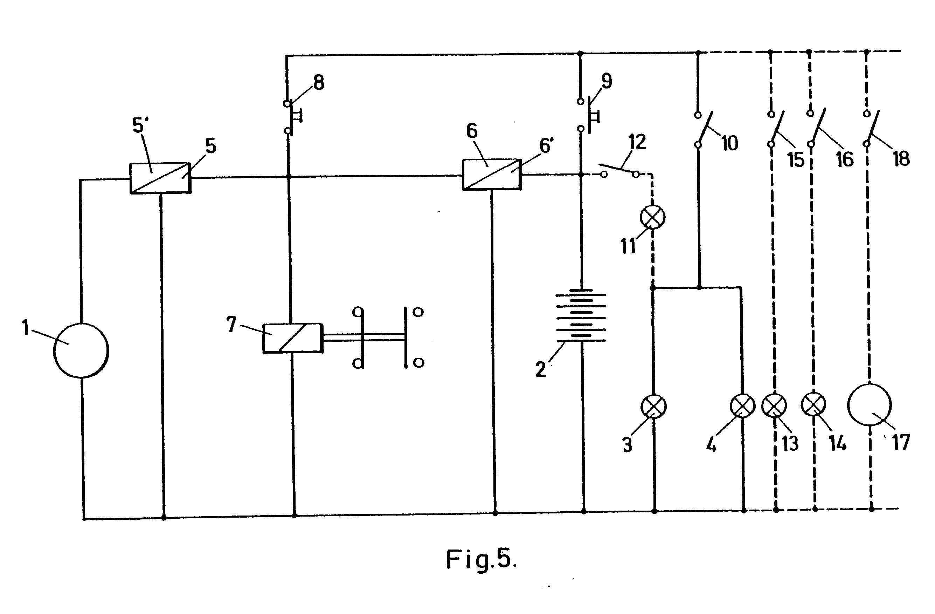

La figure 5 illustre un schéma électrique analogue à celui montré par la figure 4. Les éléments électromécaniques de commutation, tels que relais et interrupteurs, y sont remplacés par un interrupteur électronique 19. Le stabilisateur de tension 5 y est formé par un circuit intégré qui adapté également l'impédance des lampes vers le générateur afin que celles-ci, reçoivent une énergie constante du générateur. Ce circuit intégré peut être logé dans le phare 24.

De même, le rechargeur 6' et l'indicateur de tension 6 peuvent éventuellement être formés par un seul et même circuit intégré.

Exemple

Le générateur comprend 64 pôles alternés dont la puissance délivrée est de ±15 Watts. La batterie est du type Nickel-Cadmium et comporte cinq cellules chacune de 1.2 Volts. Le stabilisateur de tension contrôle si un seuil de tension de 6 Volts n'est pas franchi. L'indicateur de tension contrôle si la tension de la batterie ne descend pas au dessous de 5.5 Volts.

Concernant les dimensions du générateur, on a 120 mm pour le diamètre extérieur et 45 mm pour le diamètre intérieur. L'épaisseur est de 14 mm. Les parties formant l'enveloppe du générateur ainsi que les organes d'entraînement en saillie sont réalisés en PVC ou en aluminium.

Grâce au nombre élévé de pôles, on obtient un générateur qui est bien adapté aux vitesses relativement faibles des véhicules considérés.

Par ailleurs, le dispositif coaxiale du générateur permet de réduire fortement les frottements survenant lors du transfert du mouvement de rotation de la roue à celui du rotor du générateur.

De plus, en utilisant deux enveloppes métalliques ajourées autour de la bobine, on réduit substantiellement les courants de Foucault induits.

En outre, grâce à l'utilisation d'une seule bobine, la construction du générateur s'en trouve fortement simplifiée. Par ailleurs, vu l'absence de têtes de bobine, des économies considérables de cuivre sont réalisées, diminuant du même coup le poids. De même, l'utilisation pour la bobine d'une enveloppe métallique ajourée de manière appropriée, diminue également avantageusement le poids du générateur.

Enfin, en montant le générateur entre les branches de la fourche, on rend son vol plus difficile.

Les formes de réalisation décrites ci-dessus ont uniquement pour but de mettre en évidence une possibilité d'application du dispositif d'éclairage suivant l'invention.

L'invention n'est donc nullement limitée aux formes de réalisation décrites ci-avant et dans le cadre de la protection recherchée diverses modifications peuvent être imaginées, entre autres quant à la forme, aux dimensions et au choix des matériaux de certaines parties formant le dispositif d'éclairage.

Ainsi, les moyens d'entraînement peuvent être pourvus, à leur extrémité libre, d'organes de fixation au moyen desquels ils peuvent être fixés aux rayons de manière amovible. Cela permet d'éviter les chocs lors de la mise en route, lors de l'arrêt ou, de manière générale, lors de l'accélération du véhicule.

## Revendications

1. Dispositif d'éclairage pour véhicule se déplaçant sans moteur et sur roues, tel que bicyclette, et tricycle, comprenant au moins une lampe (3, 4) alimentée par un générateur (1), en particulier une dynamo, le générateur (1) étant annulaire et donc dépourvu d'arbre de rotation, le générateur (1) étant agencé pour être monté de façon détachable latéralement par rapport à une desdites roues (20), entre les branches d'une fourche (22), et comprenant un stator et un rotor pouvant être entraînés par une roue (20) du véhicule, le générateur (1) comprenant au moins seize pôles (27) répartis sur 360° autour de l'axe (21) de la roue (20) de manière hétéropolaire face à un bobinage d'induction formé par une bobine unique (26), lesdites pôles (27) et bobine (26) étant montés de manière mobile l'un par rapport à l'autre, le stator étant fixé au châssis (23) du véhicule, de telle sorte que le générateur (1) soit coaxial avec l'axe (21) de la roue (20) entraînement le rotor caractérisé en ce que la bobine (26) s'étend également sur 360° autour de l'arbre de rotation, en ce que la bobine (26) est logée dans au moins une enveloppe métallique ajourée (28) et en ce que le générateur (1) est logé dans une enveloppe annulaire, comprenant deux parties (31, 32) mobiles d'une par rapport à l'autre, une partie (31) délimitant un logement ouverte latéralement, l'autre partie étant formée d'un couvercle (32) pour ce logement, les pôles précités (27) étant fixés sur une de ces deux parties (31), la bobine (26) étant fixée sur l'autre partie (32).

2. Dispositif d'éclairage suivant la revendication 1, caractérisé en ce que la partie formant le logement (31) présente une section transversale en U sur une des parois intérieures duquel sont fixés les pôles (27), tandis que la bobine (26) est fixée d'une manière rigide sur la face intérieure du couvercle (32) en s'étendant également à l'intérieur du logement.

3. Dispositif d'éclairage suivant l'une ou l'autre des revendications 1 et 2, caractérisé en ce que des organes d'entraînement (34) sont fixés sur la paroi extérieure du logement, ces organes (34) coopérant avec des rayons (35) de la roue (20) tournant autour de son axe (21).

4. Dispositif d'éclairage suivant l'une quelconque des revendications 1 à 3, caractérisé en ce que les pôles (27) s'étendent extérieurement par rapport à la bobine (26).

5. Dispositif d'éclairage suivant l'une quelconque des revendications 1 à 4, caractérisé en ce que les pôles (27) sont formés par des aimants permanents.

6. Dispositif d'éclairage suivant l'une quelconque des revendications 1 à 5, caractérisé en ce que le centre des spires formant la bobine (26) est situé sur l'axe (21) du générateur (1).

## Patentansprüche

1. Beleuchtungseinrichtung für Fahrzeuge, welche sich ohne Motor auf Räder, wie Fahrräder, Dreiräder, bewegen, die wenigstens eine Lampe (3, 4) aufweist, die von einem Generator (1), insbesondere einem Dynamo, versorgt wird, wobei der Generator (1) ringförmige ausgebildet ist und keine Drehwelle aufweist, der Generator (1) derart ausgelegt ist, daß er lösbar in Querrichtung bezüglich eines der Räder (20) zwischen den Schenkeln einer Gabel (22) anbringbar ist, und der einen Stator und einen Rotor aufweist, die durch ein Rad (20) des Fahrzeugs angetrieben sind, und wobei der Generator (1) wenigstens 16 Pole (27) aufweist, die auf 360° um die Achse (21) des Rads (20) wechselpolig einer Induktionsspule gegenüberliegend verteilt sind, die von einer einzigen Spule (26) gebildet wird, wobei die Pole (27) und die Spule (26) beweglich bezüglich einander vorgesehen sind, der Stator am Rahmen (23) des Fahrzeugs derart festgelegt ist, daß der Generator (1) koaxial zur Achse (21) des Rads (20) beim Antreiben des Rotors ist, dadurch gekennzeichnet, daß die Spule (26) sich ebenfalls um 360° um die Drehachse erstreckt, die Spule (26) wenigstens in einer durchbrochenen Metallummantelung (20) untergebracht ist und daß der Generator (1) in einer kreisförmigen Hülle untergebracht ist, die zwei Teile (31, 32) aufweist, die bezüglich einander beweglich sind, wobei ein Teil (31) ein zur Seite hin offenes Gehäuse begrenzt, das andere Teil von einem Deckel (32) für das Gehäuse gebildet wird, die vorstehend genannten Pole (27) auf einem der Teile (31) befestigt sind und die Spule (26) auf dem anderen Teil (32) befestigt ist.

2. Beleuchtungseinrichtung nach Anspruch 1, dadurch gekennzeichnet, daß der das Gehäuse (31) bildende Teil einen U-förmigen Querschnitt an einer der Innenwände hat, an der die Pole (27) befestigt sind, während die Spule (26) starr auf der Innenfläche des Deckels (32) befestigt ist und sich ebenfalls in Richtung auf das Innere des Gehäuses erstreckt.

3. Beleuchtungseinrichtung nach einem der Ansprüche 1 und 2, dadurch gekennzeichnet, daß die Antriebsorgane (34) auf der Außenwand des Gehäuses befestigt sind und daß die Organe (34) mit den Speichen (35) des Rads (20) zusammenarbeiten, das sich um seine Achse (21) dreht.

4. Beleuchtungseinrichtung nach einem der Ansprüche 1 bis 3, dadurch gekennzeichnet, daß die Pole (27) nach außen bezüglich der Spule (26) verlaufen.

5. Beleuchtungseinrichtung nach einem der Ansprüche 1 bis 4, dadurch gekennzeichnet, daß die Pole (27) von Permanentmagneten gebildet werden.

6. Beleuchtungseinrichtung nach einem der Ansprüche 1 bis 5, dadurch gekennzeichnet, daß die Mitte der die Spule (26) bildenden Windungen auf der Achse (21) des Generators (1) liegt.

**Claims**

1. A lighting device for a motorless wheeled vehicle such as a bicycle and tricycle comprising at least one lamp (3, 4) supplied by a generator (1), in particular a dynamo, the generator (1) being annular and therefore bereft of a rotary shaft, the generator (1) being adapted to be mounted in detachable manner laterally in relation to one of the said wheels (20), between the arms of a fork (22) and comprising a stator and a rotor adapted to be driven by a wheel (20) of the vehicle, the generator (1) comprising at least sixteen poles (27) distributed over 360° around the axle (21) of the wheel (20) in heteropolar fashion and facing an induction coil consisting of a single coil (26), the said poles (27) and coil (26) being mounted for movement in respect of one another, the stator being fixed to the frame (23) of the vehicle in such a way that the generator (1) is coaxial with the axle (21) of the wheel (20) driving the rotor, characterised in that the coil (26) likewise extends over 360° around the rotating shaft, in that the coil (26) is housed in at least one open-work metal casing (28) and in that the generator (1) is housed in an annular casing comprising two parts (31, 32) adapted for movement one in relation to the other, one part (31) defining a laterally open housing, the other part consisting of a cover (32) for this housing, the aforesaid poles (27) being fixed on one of these two parts (31), the coil (26) being fixed on the other part (32).

2. A lighting device according to Claim 1, characterised in that the part forming the housing (31) has a U-shaped cross-section on one of the inner walls of which the poles (27) are fixed, while the coil (26) is fixed rigidly on the inner surface of the cover (32) extending likewise into the interior of the housing.

3. A lighting device according to one or other of Claims 1 and 2, characterised in that drive means (34) are fixed on the outer wall of the housing, the said means (34) co-operating with the spoke (35) of the wheel (20) rotating about its axle (21).

4. A lighting device according to any one of Claims 1 to 3, characterised in that the poles (27) extend externally in relation to the coil (26).

5. A lighting device according to any one of Claims 1 to 4, characterised in that the poles (27) consist of permanent magnets.

6. A lighting device according to any one of Claims 1 to 5, characterised in that the centre of the turns forming the coil (26) is situated on the axle (21) of the generator (1).

Fig.1.

Fig.2.

Fig.3.

Fig.4.

Fig.5.

3

Fig.6.

EP 0 260 317 B1